Europäisches Patentamt

European Patent Office

Office européen des brevets

(11) Publication number: **0 266 026**
**A1**

## (12) EUROPEAN PATENT APPLICATION

(21) Application number: **87306732.6**

(22) Date of filing: **29.07.87**

(51) Int. Cl.4: **H01Q 3/08 , H01Q 1/12**

(30) Priority: **01.08.86 NZ 217061**

(43) Date of publication of application:
**04.05.88 Bulletin 88/18**

(84) Designated Contracting States:
**DE FR GB IT**

(71) Applicant: **HER MAJESTY THE QUEEN in right of New Zealand Department of Scientific and Industrial Research**
**Head Office Charles Ferguson Building (Private Bag) Bowen Street**
**Wellington(NZ)**

(72) Inventor: **Ellis, Peter James Division of Scientific and**
**Industrial Research Bell Road.**
**Lower Hutt Wellington(NZ)**

(74) Representative: **Corin, Christopher John et al**
**Mathisen Macara & Co. The Coach House 6-8 Swakeleys Road**
**Ickenham Uxbridge UB10 8BZ(GB)**

(54) **Tracking antenna mount.**

(57) A dish tracking antenna mount which supports the antenna (1) above the ground by six extendable struts(2 to 7). The struts are paired at the antenna end and connected to three symmetrically spaced mounting locations on the antenna by pivotal joints (21) having two degrees of freedom. At the ground end each strut of each pair is connected with the adjacent strut of the adjoining pair to three symmetrically spaced apart ground anchor points (10, 11, 12). By varying the lengths of the struts the elevation and azimuth of the antenna can be varied to direct it to any given point in the hemisphere. An on-line real-time computer is programmed to calculate the strut lengths for a given antenna elevation and azimuth and controls the strut extensions accordingly. In the preferred form the extendable struts are double-acting hydraulic rams (2 to 7).

FIG. 3

## TRACKING ANTENNA MOUNT

Tracking antennas are extensively used to receive data from aircraft and non-geosynchronous spacecraft. Typically the antenna consists of an aluminium dish with a parabolic reflecting surface, mounted on one of several types of mount which permit the dish to follow the path of a moving object at any point from horizon to zenith.

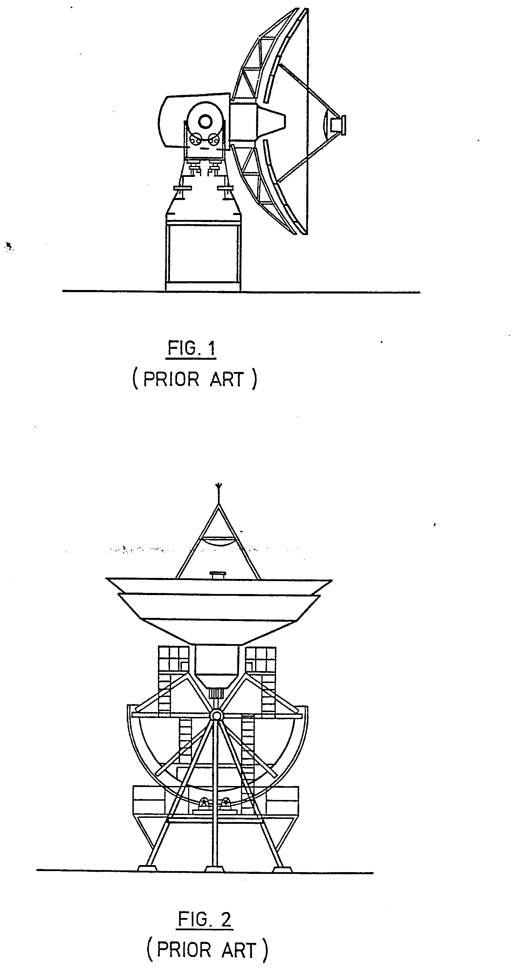

Dish sizes vary widely, but a common range for satellite data reception is between three and ten metres in diameter. The antenna is mounted on a pedestal which contains drive motors and bearings to allow dish rotation around two axes. The most common type of support is the elevation-over-azimuth mount (sometimes called the 'altazimuth' mount),in which the antenna rotates about a vertical axis. This is shown in figure 1. Above the azimuth bearing is a bearing with a horizontal axis, giving the rotation in elevation.

The second common type of mounting is the X-Y mount shown in figure 2. This uses two orthogonal horizontal axes, one above the other, to permit dish rotation to any point by a combined rotation around each axis.

Both designs suffer from the 'keyhole' problem. In the altazimuth mount, the problem occurs at the zenith, that is, vertically above the azimuth axis. A satellite whose path passes close to the zenith will cause the antenna to slew rapidly as it tries to follow the spacecraft through a rapidly changing range of azimuth angles. Theoretically, the required slew rate approaches infinity as the satellite path approaches the zenith. With the advent of higher frequency operation, the antenna beamwidth is becoming narrower, and this leads to higher slew rate requirements if the signal is not to be lost near the zenith. For operation at 8Ghz, the beamwidth is about 0.5 degrees. The solution has been to use large drive motors and bearings, with a consequent increase in the overall size and mass of the system, and a large intermittent load on the power supply.

The X-Y mount has two 'keyholes' at opposite ends of a horizontal line through the pedestal, extended to the horizon. These horizon keyholes require a rapid exchange of angular position between the two axes, before the antenna can continue sweeping around or close to the horizon.

Apart from the bearings and drives these mounts suffer the disadvantage of requiring large and costly pedestals. Along with heavy bearings and drives these are required to resist the substantial windage forces experienced on an inevitably exposed site. Again these forces are applied entirely through each bearing axis, which must be designed accordingly.

Another problem with mounts of this type is that maintenance, for instance of a bearing, will often require the dish to be removed, which is an expensive undertaking.

Another disadvantage with antennas which rotate about the dish axis is the need for a waveguide with a rotatable section between the pedestal and dish if the RF signal is to be conveyed directly to a ground based receiver.

It is an object of the present invention to provide a tracking antenna mount which goes at least some way towards overcoming the abovementioned problems.

Accordingly in one aspect the invention consists in a dish tracking antenna mount comprising:
a sub-frame to which the antenna is attached such that the principal plane of the sub frame is perpendicular to the antenna axis,
six controllable length struts which in use support the sub-frame above the ground, each strut having a two-degree of freedom pivotal joint fixed to each end,
said sub-frame having three spaced apart strut mounting locations positioned about the dish axis,
the upper joints of pairs of struts being connected to a respective one of each of the three sub-frame mounting locations,
the lower joints of struts of adjacent members of different pairs being adapted to be connected to one of three symmetrically sited ground anchor points disposed about the vertical axis of the mount,
force generating means which vary the lengths of each strut to cause the location and attitude of the sub-frame to vary,
and an on-line real-time computer programmed to calculate the required strut configurations for a given sub-frame elevation and azimuth,
said computer controlling the strut force generating means in accordance with the calculated strut configurations.

In a further aspect the invention consists in a method of controlling the elevation and azimuth of a dish tracking antenna comprising:
supporting the antenna above the ground on a framework of six controllable length struts, each strut having a two-degree of freedom pivotal joint fixed to each, end,
the upper joints of pairs of struts being connected to a respective one of each of three spaced apart mounting locations associated with the dish antenna,
the lower joints of struts of adjacent members of different pairs being connected to one of three spaced apart ground anchor points disposed about the vertical axis of the framework,

and controlling the strut lengths in accordance with the outputs of an on-line real-time computer programmed to calculate the individual strut configurations for a given dish elevation and azimuth.

The preferred forms of the invention will be described with reference to the drawings accompanying the specification in which:

Figure 1 shows an antenna mount of the elevation-over-azimuth type,

Figure 2 shows an antenna mount of the X-Y type,

Figure 3 is an elevation of the antenna mount of the present invention in one position,

Figure 4 is a diagramatic plan view of the antenna mount,

Figure 5 is an elevation of the antenna mount in a second position,

Figures 6a and 6b show one form of strut bearing for the antenna mount, and

Figure 7 shows a second form of strut bearing for the antenna mount.

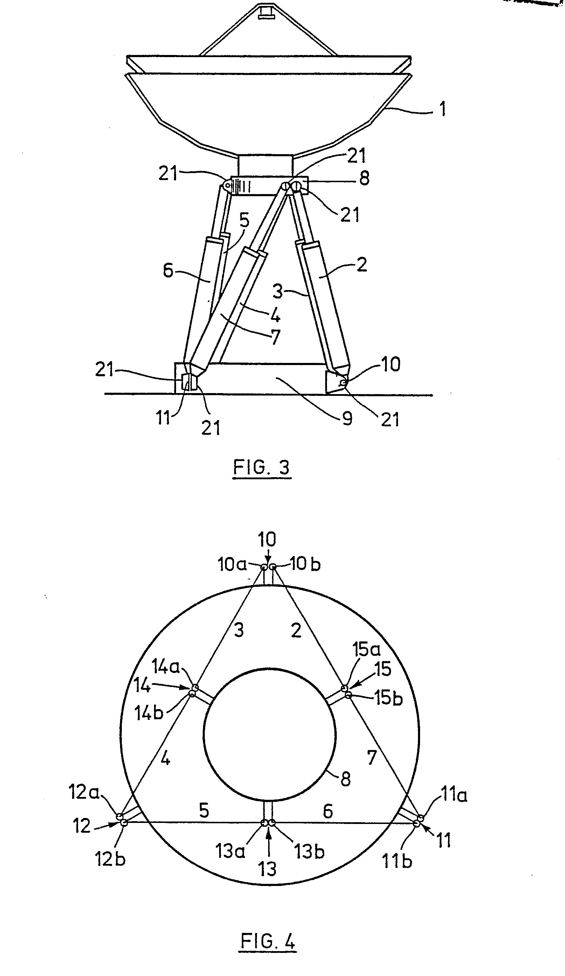

Figures 3 and 4 show the basic principles of the mount. It consists of six support struts 2 to 7 which attach to the antenna sub-frame or backplane 8, and to the ground or pedestal 9. The system is near-kinematic in that the struts are mounted in pairs, with each pair adjacent to three equispaced points on a common circumference. The ground support points 10, 11, 12 are displaced by 60 degrees from those on the antenna backplane 13, 14, 15. Each strut is extendable, controlled either by a direct motor drive, or by hydraulics as shown in figure 3. Independent control of the length of each strut gives a six degree of freedom system, which can be translated and rotated. A major requirement is that the struts be coupled at each end by a universal joint 21, ensuring that the stresses in each strut are either compressive or tensile.

The present antenna mount making use of a novel arrangement of universal joints enables the antenna to track over the entire hemisphere. A feature of this mount is that tracking control is only possible by an on-line computer, since a given satellite trajectory is achieved by a complex combination of strut length changes.

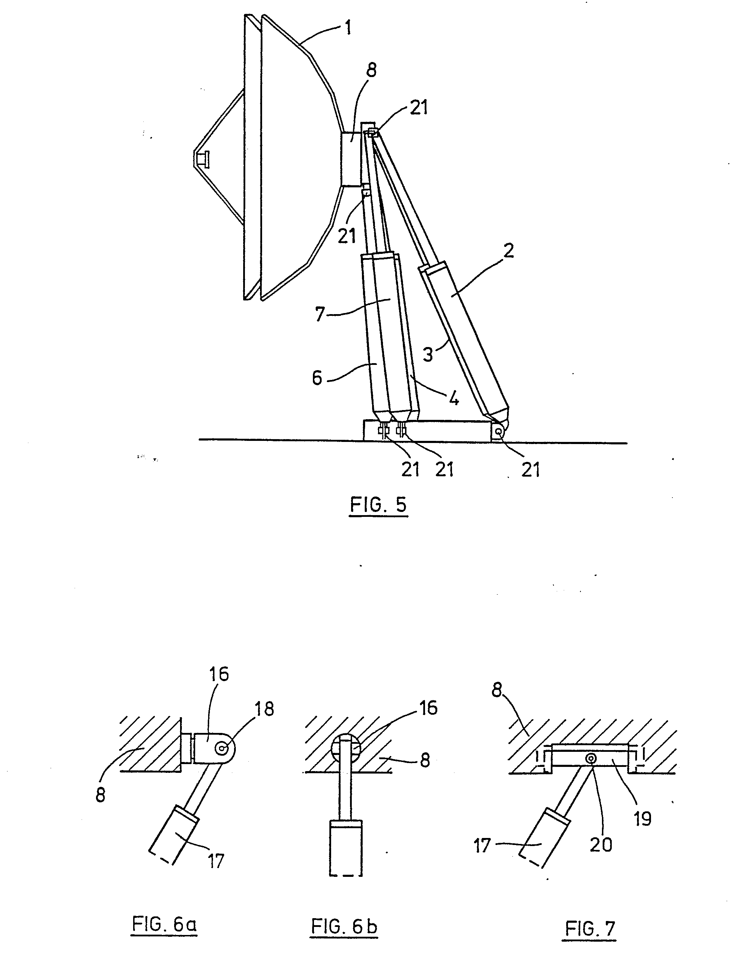

An understanding of how the mount moves the antenna can be obtained by considering figures 3 and 5. Assuming the antenna is pointing vertically (figure 3 - where all the struts are at minimum length) it is moved to a horizontal elevation with no change in azimuth by essentially increasing the lengths of extendible struts 2, 3, 4 and 7. It can readily be appreciated that by suitably varying the lengths of struts in appropriate proportions the backplane, and thus the antenna, can be pointed in any desired direction by a combination of rotation and translation.

If movement of the dish results in a pair of the support struts (attached to a common antenna anchor point) becoming aligned with the antenna backplane, the structure becomes unstable in the presence of horizontal (windage) forces. The solution is to use the six degrees of freedom to combine a lateral shift of the antenna with a rotation away from the zenith pointing position. The relation between the lateral shift and the antenna zenith angle may be a simple one which has a radial movement proportional to the angle, or a more complex relationship. The end result must be to ensure that each strut pair is never aligned with the antenna backplane. When the antenna is pointing at the horizon, the backplane is therefore on or outside the ground plane mounting circle as shown in figure 5 where struts 5 and 6 have been rotated beyond the vertical. It should be noted that at any position away from zenith pointing, the antenna is not rotated about its own axis relative to the zenith position. That is, at any azimuth and elevation angle, the dish is oriented as if it moved there from the zenith by a simple elevation rotation in the azimuth direction.

Several different arrangements of mounting point positions are possible, both on the ground and on the antenna backplane. In most cases, the points are at a common radius from the axis of the pedestal. The radius on the ground may differ from that on the antenna, for instance greater stability may result from a pyramid structure, with a ground anchor point radius greater than the antenna backplane radius (as in figure 4). The system is simplified if the maximum strut length required is less than twice the collapsed length. To achieve this, the diameter of the support circle at the antenna is typically less than the full dish diameter. The length of the support struts may also be reduced by mounting the support structure on a pedestal and scaling down all lengths accordingly.

The relatively wide separation between the three support points results in a much higher strength-to-weight ratio compared to the single pivot points on conventional mounts. Thus the diameter of the struts can be modest. For a hydraulic drive, the strut may consist of a cylinder, piston and ram, sized to provide sufficient driving and supporting forces at the design hydraulic pressure, and to resist Euler buckling.

The joints 21 coupling the struts to the antenna backplane and the ground pedestal must be able to allow the relative movement between the coupled parts and at the same time carry their share of the load forces. Universal joints are normally designed to transmit rotary motion, or to permit one member to rotate while anchorage to a fixed element. In the present case, unless the strut length is to be controlled by an external drive motor, the transmission of rotary motion is not required. The commonly used Hookes joint, or the constant velocity joint, does not have sufficient angular range in two axes to accommodate the range of movement required. A joint based on the altazimuth mount gives the range, but has to slew rapidly as the driven member moves close to its local 'zenith', that is, when the strut is parallel to the azimuth axis. At the zenith point itself, if the angular force is applied in the direction of the elevation axis, the joint can lock up and break.

Figures 6a and 6b show an arrangement by which the altazimuth joint can be used without the danger of locking. The joint is mounted on the outer edge of the antenna backplane 8, with the axis about which part 16 rotates aligned with the radius from the antenna axis. The strut 17 is coupled to part 16 by a pivot pin 18. Since the strut 17 never becomes parallel to the backplane 8, it follows that the strut is never aligned with azimuth axis, and the joint cannot lock. A similar configuration is used for the ground support points. An alternative joint shown in figure 7 is a double ended rotatable support cylinder 19 with its axis parallel to the backplane 8. The strut 17 is coupled to cylinder 19 by a pivot pin 20.

In the preferred forms of the invention where the struts are formed by hydraulic rams, two alternative hydraulic drives may be used. The first uses a single pump and hydraulic system, with flexible couplers to transmit the fluid to the double acting rams forming the struts. Control is achieved by siz electrically driven control valves. The second form uses separate pumps attached to each strut, forming six closed systems.

Attitude and position control of the antenna mount requires (a) a knowledge of the length of each strut at any instant or (b) a measure of the position of the centroid and the angular position of the antenna, or (c) a knowledge of the angular disposition of each strut relative to the ground, or to the antenna backplane. Signals indicative of these values may be used with an appropriate computer program to direct the antenna axis in a given direction, and to position the centroid of the antenna. Antenna attitude control requires accurate data to maintain pointing accuracies of better than 0.1 degrees. A lesser accuracy is required for the position of the centroid, since the only constraint is the need to limit the angle between any strut and the antenna backplane.

In the simplest form the invention uses sensors to determine the strut lengths rather than angles. A computer program translates the required attitude and position into strut lengths. A second program is necessary to close the loop of a monopulse tracker. A personal computer of the IBM PC AT type is sufficient for on-line control of the antenna in all situations.

It will be appreciated from the above description that the present invention has the following advantages:

(a) Absence of 'keyhole' problem which eliminates the need for high slew rates.

(b) Low and relatively uniform power consumption.

(c) Small drive unit. For hydraulic system; pump and pressure reservoir only.

(d) Standard well proven hardware, utilising standard hydraulic components and easily developed small sized bearings. No necessity for gear drives.

(e) Lighter construction of both antenna and mounting, since wide separation of anchor points gives a large angular moment for a relatively small applied force.

(f) Ease of transport, since mounting assembly breaks down into six small diameter individual units.

(g) Complexity of tracking path limited only by the software.

(h) RF feed from dish to pedestal can be a single-section flexible coupler.

(i) Ease of maintenance, since with all struts in collapsed state, the antenna points vertically, and one strut at a time can be removed without the need for a large crane.

**Claims**

1. A method of controlling the elevation and azimuth of a dish tracking antenna characterised in that:
the antenna (1) is supported above the ground on a framework of six controllable length struts (2 to 7), each strut having a two-degree of freedom pivotal joint (21) fixed to each end,
the upper joints (21) of pairs of struts are connected to a respective one of each of three spaced apart mounting locations (13, 14, 15) associated with the dish antenna,
the lower joints (21) of struts of adjacent members of different pairs are connected to one of three spaced apart ground anchor points (10, 11, 12) disposed about the vertical axis of the framework,
and the strut lengths are controlled in accordance with the outputs of an on-line real-time computer programmed to calculate the individual strut configurations for a given dish elevation and azimuth.

2. A method as claimed in claim 1 wherein the ground anchor points (10, 11, 12) are mounted on a pedestal (9) to reduce the length of the struts required to locate the dish a given height above the ground level of the antenna site.

3. A method as claimed in either of claims 1 and 2 wherein antenna strut mounting locations (13, 14, 15) are equidistantly disposed on a circle and said ground anchor points (10, 11, 12) are also equidistantly disposed on a circle rotated 60° with respect to the antenna mounting locations.

4. A method according to claim 3 wherein the diameter of the circle on which the antenna strut locations lie is less than the diameter of the dish antenna.

5. A method according to either of claims 3 or 4 wherein the diameter of the strut ground locations circle is greater than the diameter of the antenna mounting locations circle.

6. A dish tracking antenna mount wherein the dish antenna perse is supported by a sub-frame (8) characterised in that:
six controllable length struts (2 to 7) support the sub-frame above the ground, each strut having a two-degree of freedom pivotal joint (21) fixed to each end,
said sub-frame (8) has three spaced apart strut mounting locations (13, 14, 15) positioned about the dish axis,
the upper joints (21) of pairs of struts are connected to a respective one of each of the three sub-frame mounting locations,
the lower joints (21) of struts of adjacent members of different pairs are adapted to be connected to one of three symmetrically sited ground anchor points (10, 11, 12) disposed about the vertical axis of the mount,
force generating means which vary the lengths of each strut to cause the location and attitude of the sub-frame to vary,
and an on-line real-time computer programmed to calculate the required strut configurations for a given sub-frame elevation and azimuth,
said computer controlling the strut force generating means in accordance with the calculated strut configurations.

7. An antenna mount according to claim 6 wherein double-acting hydraulic rams (2 to 7) constitute said struts and the force generating means.

8. An antenna mount according to either of claims 6 or 7 wherein the two-degree of freedom pivotal joints (21) are of the altazimuth type where the ends of the struts are pin-jointed to a rotational mounting (16/19) having an axis parallel to the ground or parallel to the sub-frame respectively, said pin axis (18) being at right angles to the mounting axis.

9. An antenna mount according to claim 8 wherein the rotational mounting (16) is supported by a single end bearing.

10. An antenna mount according to claim 8 wherein the rotational mounting (19) is supported by two end bearings.

11. An antenna mount according to any one of claims 6 to 10 wherein said sub-frame (8) is formed by the structural framework of the dish antenna.

FIG. 1
( PRIOR ART )

FIG. 2
( PRIOR ART )

FIG. 3

FIG. 4

FIG. 5

FIG. 6a

FIG. 6b

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 374 977 (MOY et al.) <br> * figure 1; column 1, lines 51-63 * <br> --- | 1,6 | H 01 Q 3/08 <br> H 01 Q 1/12 |
| Y | DE-A-3 308 076 (DIEHL) <br> * figure 1; abstract * <br> --- | 1,6 | |
| P,A | EP-A-0 227 930 (SIEMENS) <br> * figure 3, claim 1 * <br> --- | 1,6 | |
| A | GB-A-1 602 194 (MARCONI) <br> * figure 1; page 2, lines 2-4 * <br> --- | 2 | |
| A | US-A-3 215 391 (G.D. STORM) <br> * figure 5; column 5, lines 19-45 * <br> --- | 7 | |
| A | US-A-4 360 182 (J.W. TITUS) <br> * figure 2; abstract * <br> --- | | |
| A | PATENT ABSTRACTS OF JAPAN, vol. 7, no. 162 (E-187)[1307], 15th July 1983; & JP - A 58 69102 (NIHON MUSEN) 25-04-1983 <br> --- | | |
| A | US-A-4 232 320 (SAVALLE) <br> * figure 2, abstract * <br> ----- | | |

**TECHNICAL FIELDS SEARCHED (Int. Cl.4)**

H 01 Q 1/12
H 01 Q 3/08

The present search report has been drawn up for all claims

| Place of search | Date of completion of the search | Examiner |
|---|---|---|
| BERLIN | 23-11-1987 | BREUSING J |